# EUROPÄISCHE PATENTSCHRIFT

(11) **EP 2 500 669 B1**
(45) Veröffentlichungstag und Bekanntmachung des Hinweises auf die Patenterteilung: **19.04.2017**
(21) Anmeldenummer: 11158044.5
(22) Anmeldetag: 14.03.2011
(51) Int. Cl.: F24J 2/07, F24J 2/24

(54) **Solarempfänger und thermisches Solarturm-Kraftwerk**
Solar receiver and thermal solar tower power plant
Recepteur solaire et centrale thermique à tour solaire

(43) Veröffentlichungstag der Anmeldung: 19.09.2012
(73) Patentinhaber: Deutsches Zentrum für Luft- und Raumfahrt e.V., 51170 Köln (DE)
(72) Erfinder: Wieghardt, Kai, Dr., 44869 Bochum (DE)
(74) Vertreter: Patentanwälte ter Smitten Eberlein-Van Hoof Rütten Partnerschaftsgesellschaft mbB

(56) Entgegenhaltungen:
- DE-A1- 3 922 903
- FR-A1- 2 410 795
- US-A- 4 384 550
- US-A1- 2010 101 564

## Beschreibung

Die Erfindung bezieht sich auf einen Solarempfänger und ein thermisches Solarturm-Kraftwerk mit einem zentralen Solarempfänger und einem Heliostaten-Feld.

Bei einem thermischen Solarturm-Kraftwerk wird die Sonnenstrahlung durch das Heliostaten-Feld, das aus einer Vielzahl nachgeführter Spiegel besteht, auf den zentralen Solarempfänger gerichtet, der in der Regel von einem Turm in einer Höhe von 50 m bis 300 m gehalten wird. In dem Solarempfänger wird der Wärmeenergie-Anteil der Sonnenstrahlung von einem Wärmeträger- Fluid absorbiert, das beispielsweise aus Öl, flüssigem Nitratsalz oder einem Gas bestehen kann. Das Wärmeträger-Fluid wird in einem geschlossenen Kreislauf zu einer Generatorstation gepumpt, in der die in dem Wärmeträger-Fluid gespeicherte Wärmeenergie, beispielsweise über eine Dampfturbine, in elektrische Energie umgewandelt wird.

Um einen möglichst hohen Gesamt-Wirkungsgrad des Solarturm-Kraftwerks zu erreichen, müssen die Verluste des Solarempfängers möglichst gering gehalten werden. Diese Verluste ergeben sich im wesentlichen aus den Reflektions-Verlusten, die aus der von dem Solarempfänger ungenutzt reflektierten Sonnenstrahlung resultieren, den Konvektions-Verlusten, die sich aus der durch den Solarempfänger an die Umgebung abgestrahlte Wärmestrahlung ergeben, und den sogenannten Intercept-Verlusten, die sich aus dem von den Heliostaten reflektierten Anteil der Sonnenstrahlung ergeben, der den Solarempfänger verfehlt.

Der Solarempfänger ist wegen der höhen Temperaturen und der Forderung nach einem hohen Wirkungsgrad technisch anspruchsvoll. Hohe räumliche und zeitliche Temperatur- Unterschiede innerhalb des Solarempfängers können durch die hierdurch generierten mechanischen Spannungen die Lebensdauer des Solarempfängers erheblich verringern. Die Kosten für den Turm hängen in hohem Maße vom Gewicht des Solarempfängers ab, so dass ein möglichst geringes Gewicht des Solarempfängers angestrebt wird. Starke Reflexionen der Sonnenstrahlung an dem Solarempfänger sind genehmigungsrechtlich und bezüglich der Umweitverträglichkeit problematisch.

Das Dokument FR-A-2410795 zeigt die Merkmale des Präambel v. Anspruch 1. Aufgabe der Erfindung ist es daher, ein thermisches Solarturm-Kraftwerk mit einem preiswerten zentralen Solarempfänger mit einem hohen Wirkungsgrad und einer hohen Lebensdauer zu schaffen.

Diese Aufgabe wird erfindungsgemäß gelöst durch ein thermisches Solarturm-Kraftwerk mit den Merkmalen des Anspruchs 1.

Der erfindungsgemäße Solarempfänger weist einen Empfängerkörper auf, der einen Hohlraum umschließt. Der Empfängerkörper weist außenseitig mindestens eine Absorptionsleitung auf, in der ein Wärmeträger-Fluid fließt. Die von dem Heliostaten-Feld kommende Sonnenstrahlung wird von der Absorptionsleitung unmittelbar bzw. von dem darin fließenden Wärmeträger-Fluid mittelbar absorbiert. In dem Hohlraum des Empfängerkörpers ist ebenfalls eine Absorptionsleitung angeordnet, in der ebenfalls das Wärmeträger-Fluid fließt. Der Empfängerkörper weist eine Strahlungsöffnung auf, die zu einem Teil des Heliostaten-Feldes orientiert ist, wobei ein Teil des Heliostaten-Feldes die Sonnenstrahlung auf die Strahlungsöffnung richtet. Die Absorptionsleitung in dem Hohlraum wird durch die Sonnenstrahlung, die durch die Strahlungsöffnung in den Hohlraum gelangt, durch die Eigen-Wärmestrahlung der Absorptionsleitung und die heiße Hohlraum-Luft auf hohe Temperaturen erwärmt.

Der Solarempfänger weist zwei Empfängerkomponenten auf, nämlich eine externe und eine interne Komponente. Die Strahlungsöffnung wird bevorzugt von den Heliostaten gespeist, die aufgrund ihrer räumlichen Lage im Verhältnis zum Solarempfänger die bevorzugt im wesentlichen vertikale Außenseite des Empfängerkörpers nur schlecht oder sogar nur unzureichend abdecken können. Es können beispielsweise auch turmnahe Heliostaten effektiv genutzt werden, ohne dass hierfür ein separater Solarempfänger vorgesehen werden muss. Auf diese Weise wird ein einfacher Solarempfänger mit einem hohen Wirkungsgrad und relativ geringem Eigengewicht realisiert.

Die innenseitig angestrahlte Absorptionsleitung und die außenseitig angestrahlten Absorptionsleitung können grundsätzlich von ein und derselben Absorptionsleitung gebildet werden, d.h. die das Wärmeträger-Fluid führende Absorptionsleitung wird durch das Heliostaten-Feld sowohl von außen direkt als auch von innen direkt mit Sonnenstrahlung beaufschlagt. Von der Innenseite aus wird die Absorptionsleitung ferner durch die innerhalb des Hohlraums reflektierte Wärmestrahlung, durch die Eigen-Wärmestrahlung der Absorptionsleitung und durch die erhitzte Luft in dem Hohlraum erwärmt.

Vorzugsweise sind die außenseitigen Außen-Absorptionsleitung und die innenseitige Innen-Absorptionsleitung jedoch separat voneinander ausgebildet, und ist die Innen-Absorptionsleitung besonders bevorzugt stromabwärts der Außen-Absorptionsleitung angeordnet. Die AußenAbsorptionsleitung ist also in Reihe zu der Innen-Absorptionsleitung angelegt. Je nach Größe, Gestaltung und Isolation des Hohlraums innerhalb des Empfängerkörpers kann die Innen-Absorptionsleitung in dem Hohlraum wegen der geringen Strahlungs- und Konvektionsverluste in dem Hohlraum auf sehr hohe Temperaturen von 500°C bis über 1000°C erwärmt werden. Das Wärmeträger-Fluid erfährt also zunächst in der Außen-Absorptionsleitung einen ersten Temperaturhub auf beispielsweise 300°C bis 500°C und erfährt anschließend in der Innen-Absorptionsleitung einen zweiten Temperaturhub auf Temperaturen von über 400 °C. Durch die relativ geringe Temperatur der Außen-Absorptionsleitung sind auch ihre Strahlungsverluste relativ gering. Hierdurch wird mit relativ einfachen Mitteln in einem einzigen Solarempfänger eine hohe Temperatur des Wärmeträger-Fluides realisiert, wodurch wiederum der Gesamt-Wirkungsgrad des Kraftwerks unmittelbar verbessert wird.

Gemäß einer bevorzugten Ausgestaltung ist der Empfängerkörper im Wesentlichen hohlzylindrisch ausgebildet, wobei die Strahlungsöffnung bevorzugt an der unteren Stirnseite des Empfängerkörpers angeordnet ist. Die Außen-Absorptionsleitung bildet auf der Außenseite des Empfängerkörpers einen Außenzylinder. Besonders bevorzugt ist ein turmnahes Heliostaten-Feld auf die untenliegende Strahlungsöffnung und ist ein turmferneres Heliostaten-Feld auf den gesamten Empfängerkörper gerichtet. Mit dieser Anordnung wird ein hoher Wirkungsgrad des turmnahen Heliostaten-Feldes erreicht, da hier einerseits eine enge Anordnung der Heliostaten möglich ist und die Abschattungsverluste gering sind.

Gemäß einer bevorzugten Ausgestaltung ist die obere Stirnseite des Empfängerkörpers durch eine Stirnwand geschlossen, die bevorzugt thermisch isoliert ist. Der Empfängerkörper bildet zusammen mit der oberen Stirnwand einen glockenartigen Körper, der einen unten offenen Hohlraum umschließt, in dem ein konvektiver Wärmestau entsteht. Hierdurch sind die konvektiven Verluste in dem Hohlraum relativ gering, so dass die Luft in dem Hohlraum auf sehr hohe Temperaturen erwärmt wird. Unter einer thermischen Isolation im vorliegenden Sinn ist ein Bauelement zu verstehen, das einen Wärmedurchgangskoeffizienten von weniger als 1,0 W/(m² K) aufweist.

Vorzugsweise ist an der oberen Stirnseite des Empfängerkörpers ein Sammelbehälter angeordnet, in den alle Außen-Absorptionsleitungen münden. Die Innen-Absorptionsleitungen zweigen von dem Sammelbehälter ab. Das Wärmeträger-Fluid fließt also aus den Außen-Absorptionsleitungen zunächst in den Sammelbehälter, in dem seine Temperatur homogenisiert wird. Aus dem Sammelbehälter fließt das Wärmeträger-Fluid also mit derselben Temperatur in alle Innen-Absorptionsleitungen weiter. Durch diese Maßnahme werden wegen der verbesserten Temperatur-Homogenität mechanische Spannungen in den Innen-Absorptionsleitungen verringert, und ihre Lebensdauer verbessert. Gemäß einer bevorzugten Ausgestaltung sind Zulaufleitungen vorgesehen, die den Außen-Absorptionsleitungen vorgeordnet sind, und die eine Tragstuktur zum Tragen des Empfängerkörpers bilden. Die Ablaufleitungen, die der bzw. den Innen-Absorptionsleitungen nachgeschaltet sind, sind nicht-tragend ausgebildet. Eine weitere Tragstruktur zum Tragen des Empfängerkörpers ist vorzugsweise nicht vorgesehen. Die Zulaufleitungen tragen den Empfängerkörper also alleine. Die Temperatur des Wärmeträger- Fluides in den Zulaufleitungen ist relativ gering, so dass die Zulaufleitungen als Tragstruktur besser geeignet und länger haltbar sind als die Ablaufleitungen, in denen das Wärmeträger-Fluid eine Temperatur von 500°C bis weit über 1000°C aufweisen kann. Durch den Verzicht auf eine separate Tragstuktur ohne fluidleitende Funktion wird das Gesamtgewicht des Solarempfängers relativ gering gehalten.

Vorzugsweise sind mehrere Außen-Absorptionsleitungen zueinander parallel und besonders bevorzugt schraubenförmig angeordnet, können aber auch senkrecht angeordnet sein. Die zueinander parallelen Absorptionsleitungen liegen lückenlos übereinander und bilden den hohlzylindrischen selbsttragenden Empfängerkörper. Besonders bevorzugt ist keine weitere tragende Struktur für den Empfängerkörper vorgesehen, sondern bilden die Außen-Absorptionsleitungen selbst die tragende Struktur. Hierdurch wird das Gewicht des Solarempfängers gering gehalten. Die übereinander liegenden Schrauben förmig verlaufenden Außen-Absorptionsleitungen können luftdicht miteinander verbunden, beispielsweise miteinander verschweißt sein. Hierdurch wird eine luftdichte Zylinderwand gebildet, wodurch die Konvektionsverluste gering gehalten werden.

Gemäß einer bevorzugten Ausgestaltung liegen die Innen-Absorptionsleitungen im Wesentlichen in mehreren übereinanderliegenden Querebenen in dem Hohlraum. Die Innen-Absorptionsleitungen bilden beispielsweise grobmaschige und luftdurchlässige Gitterstrukturen, die in mehreren Querebenen zueinander beanstandet übereinander liegen. Die Innen-Absorptionsleitungen absorbieren die Wärme direkt aus der von den turmnahen Heliostaten eingeleiteten Sonnenstrahlung, aus der von der Innenseite des Empfängerkörpers abgestrahlten Wärmestrahlung und aus der Hohlraum-Luft. In den Maschen der Gitterstrukturen können sich über annähernd die gesamte Höhe des Empfängerkörpers erstreckende und oben geschlossene Rohrkörper angeordnet sein, durch die die Luft-Konvektion in dem Empfängerkörper-Hohlraum verringert wird.

Alternativ kann die Innen-Absorptionsleitung bzw. können die Innen-Absorptionsleitungen auch jeweils in einer Schraubenlinie angeordnet sein, also schraubenförmig in dem Hohlraum verlaufen, wobei die Absorptionsleitungs- Schraube besonders bevorzugt senkrecht in dem Hohlraum angeordnet ist.

Im Folgenden werden unter Bezugnahme auf die Zeichnungen drei Ausführungsbeispiele der Erfindung näher erläutert.

Es zeigen:
Figur 1 eine schematische Darstellung eines thermischen Solarturm-Kraftwerks mit einem zentralen Solarempfänger und einem Heliostaten-Feld,
Figur 2 einen teilweisen Längsschnitt ein erstes Ausführungsbeispiel des selbsttragenden Solarempfängers des Solarturm-Kraftwerks der Figur 1,
Figur 3 einen Längsschnitt durch einen selbsttragenden Solarempfänger gemäß einem zweiten Ausführungsbeispiel, und
Figur 4 einen Längsschlitz durch einen Solarempfänger gemäß einem dritten Ausführungsbeispiel mit einem tragenden Empfängerkörper-Rahmen.

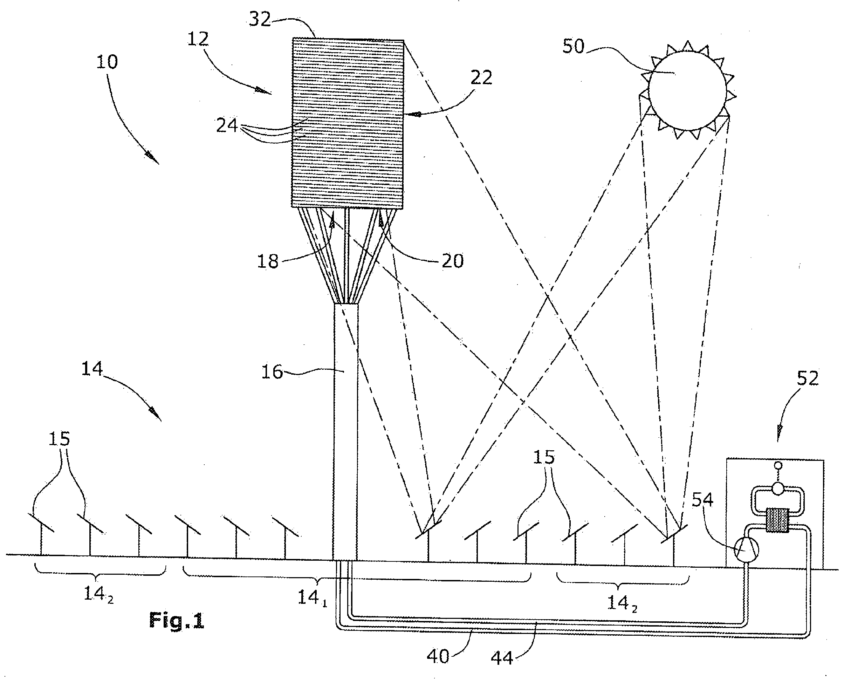

In der Figur 1 ist schematisch ein thermisches Solarturm-Kraftwerk 10 mit einem zentralen Solarempfänger 12, einem Heliostaten-Feld 14 und einer Generatorstation 52 dargestellt.

Das Heliostaten-Feld 14 ist in zwei Teilfelder gegliedert, nämlich in das annähernd kreisförmige turmnahe Heliostaten-Feld 14₁ und in das annähernd kreisringförmige turmferne Heliostaten-Feld 14₂. Jeder Heliostat weist einen Spiegel 15 auf, der über eine entsprechende Stellmimik derart nachgeführt wird, dass die von der Sonne 50 kommende Sonnenstrahlung stets auf den Solarempfänger 12 gerichtet ist.

Der Solarempfänger 12 wird von einem Turm 16 in einer Höhe von 50-300 m gehalten. Die von dem Heliostaten-Feld 14 zu dem Solarempfänger 12 reflektierte Sonnenstrahlung wird in dem Solarempfänger 12 von einem Wärmeträger-Fluid absorbiert, das in einem geschlossenen Kreislauf durch eine Pumpe 54 zu der Generatorstation 52 und von dort wieder zurück zu dem Solarempfänger 12 gepumpt wird. Als flüssiges Wärmeträger-Fluid dient vorliegend ein wasserfreies Nitratsalz. In der Generatorstation 52 gibt das Wärmeträger-Fluid seine Wärme an einen Wärmespeicher und/oder an einen Dampfturbinen-Kreis ab, durch den eine Dampfturbine angetrieben wird, die ihrerseits einen elektrischen Generator antreibt.

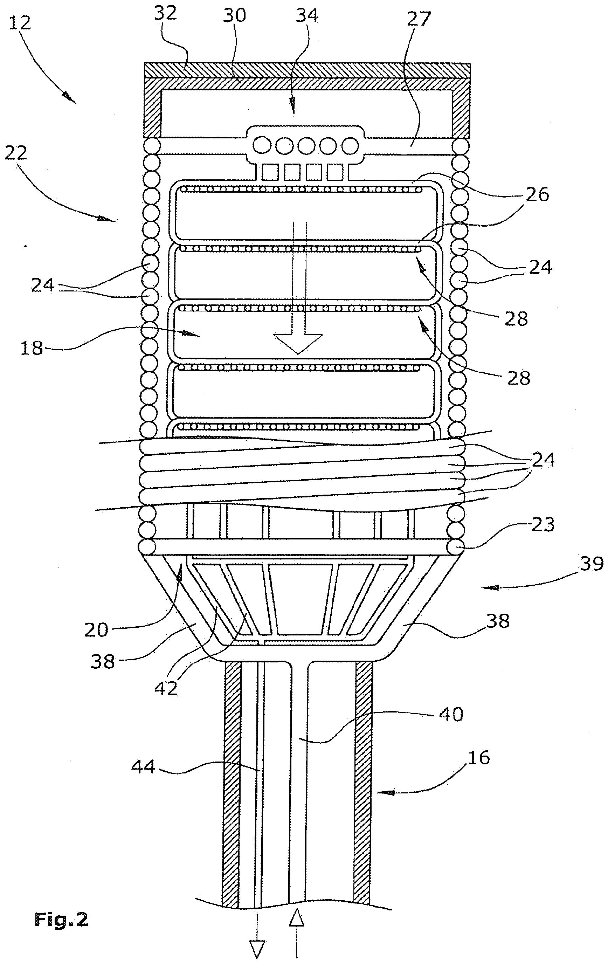

In der Figur 2 ist der Solarempfänger 12 detailliert dargestellt. In dem hohlzylindrischen Turm 16 verläuft eine Zulaufleitung 40, die im Bereich der oberen Turmöffnung in eine Ringleitung mündet, von der mehrere konisch nach oben verlaufende Zulaufleitungen 38 abzweigen, die eine Tragstuktur 39 zum Tragen eines zylindrischen Empfängerkörpers 22 bilden. Die Zulaufleitungen 38 münden in eine Ringleitung 23, die das untere Ende des Empfängerkörpers 22 definiert und diesen trägt. Der zylindrische Empfängerkörper 22 wird von mehreren Außen-Absorptionsleitungen 24 gebildet, die von der Empfängerkörper-Ringleitung 23 abzweigen und schraubenförmig nach oben laufen. Die Außen-Absorptionsleitungen 24 liegen unmittelbar aufeinander auf und sind mechanisch miteinander verbunden, beispielsweise über entsprechende umlaufende Vertikatstege miteinander verschweißt. Alle Außen-Absorptionsleitungen 24 bilden zusammen einen annähernd luftdichten Zylinderkörper, wobei die Empfängerkörper-Ringleitung 23 an dem unteren Ende eine Strahlungsöffnung 20 definiert.

Das obere Ende des Empfängerkörpers 22 ist durch eine Stirnwand 32 verschlossen, die durch eine separate Isolierplatte 30 ergänzt ist, die den von dem Empfängerkörper 22 und der Stirnwand 32 umschlossenen zylindrischen Hohlraum 18 thermisch gegenüber der Umgebung isoliert.

An dem oberen Ende des Empfängerkörpers 22 münden die Außen-Absorptionsleitungen über sternförmig angeordnete Zuleitungen 27 in einen zentralen Sammelbehälter 34, in dem das in den Außen-Absorptionsleitungen 24 erwärmte Wärmeträger-Fluid gemischt und insbesondere bezüglich seiner Temperatur homogenisiert wird. Von dem Sammelbehälter 34 zweigen mehrere Innen-Absorptionsleitungen 26 nach unten ab, die in dem Empfängerkörper- Hohlraum 18 mehrere jeweils in einer horizontalen Querebene liegenden Gitterstrukturen 28 bilden. Am unteren Ende des Empfängerkörpers 22 münden die Innen-Absorptionsleitungen 26 über mehrere konisch angeordnete Leitungen 42, die keine tragende Funktion haben, schließlich in eine einzige zentrale Sammelleitung 44 in dem Turm 16, durch die das erhitzte Wärmeträger-Fluid zu der Generatorstation 52 gepumpt wird.

Im Betrieb des Kraftwerks 10 sind die Spiegel 15 des turmnahen Heliostaten-Feldes 14₁ so ausgerichtet, dass die Strahlung der Sonne 50 im Wesentlichen auf die Strahlungsöffnung 20 gerichtet ist. Die Spiegel 15 des turmfernen Heliostaten-Feldes 14₂ sind auf den gesamten Empfängerkörper 22 einschließlich der Strahlungsöffnung 20 gerichtet.

Das von der Generatorstation 52 kommende und durch den Turm 16 nach oben zu dem Solarempfänger 12 gelangende Wärmeträger-Fluid wird in den Außen-Absorptionsleitungen 24 auf dem Weg nach oben sowohl von außen als auch von innen auf eine Temperatur von beispielsweise 300 °C bis 500 °C erwärmt. Die Außen-Absorptionsleitungen 24 werden sowohl durch die von außen auf sie gerichtete Sonnenstrahlung als auch von innen durch die direkte Einstrahlung der Sonnenstrahlung, die Wärmestrahlung der Innen-Absorptionsleitungen 26 und, in geringem Maße, durch die in dem Hohlraum 18 stehende Heißluft erwärmt.

Am oberen Ende des Empfängerkörpers 22 fließt das Wärmeträger-Fluid in den Sammelbehälter 34, und von dort anschließend in die Innen-Absorptionsleitungen 26. Auf dem Weg durch die Innen-Absorptionsleitungen 26 und die von ihnen gebildeten Gitterstrukturen 28 wird das Wärmeträger-Fluid weiter erwärmt auf Temperaturen von beispielsweise 300 °C bis 600 °C. Für diese Erwärmung ist im Wesentlichen die von außen auf die Innen-Absorptionsleitungen 26 direkt gerichtete Sonnenstrahlung verantwortlich, die von dem turmnahen Heliostaten-Feld 14₁ durch die Strahlungsöffnung 20 hindurch in den Hohlraum 18 eingeleitet wird.

Anschließend fließt das Wärmeträger-Fluid durch die Ableitungs-Leitung 44 durch den Turm 16 zurück zu der Generatorstation 52.

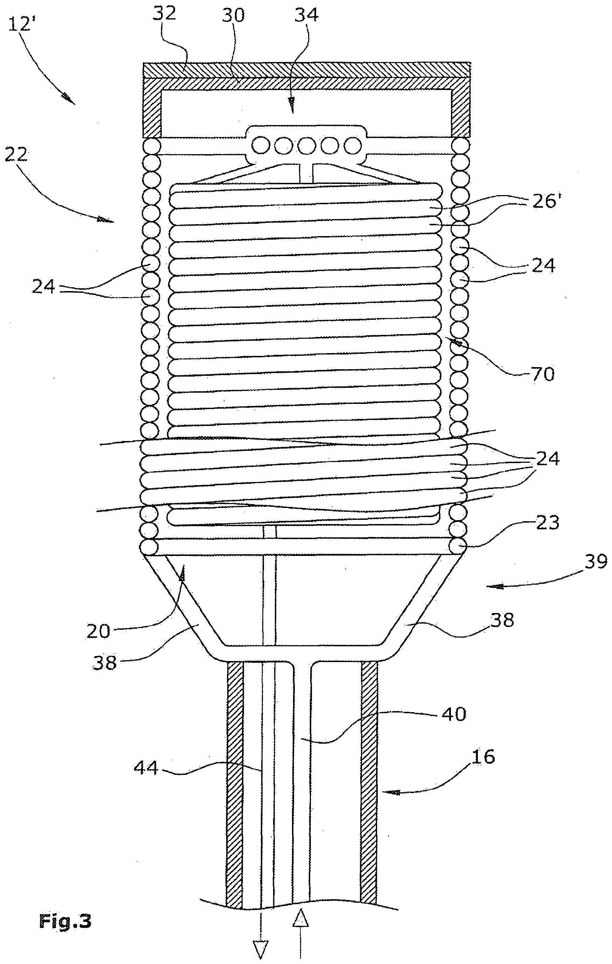

Der Solarempfänger 12' der Figur 3 unterscheidet sich ausschließlich durch die von den Innen-Absorptionsleitungen 26' gebildete Innenstruktur 70 von dem Solarempfänger 12 der Figuren 1 und 2. Die Innenstruktur 70 wird von mehreren zueinander parallelen Innen-Absorptionsleitungen 26' gebildet, die jeweils in einer Schraubenlinie verlaufen und zusammen die zylinderförmige Innenstruktur 70 bilden. Die Innen-Absorptionsleitungen 26' sind nur punktweise miteinander verbunden, so dass die Innen-Absorptionsleitungen 26' im Rahmen ihrer wärmebedingten Eigenbewegungen zueinander beweglich sind.

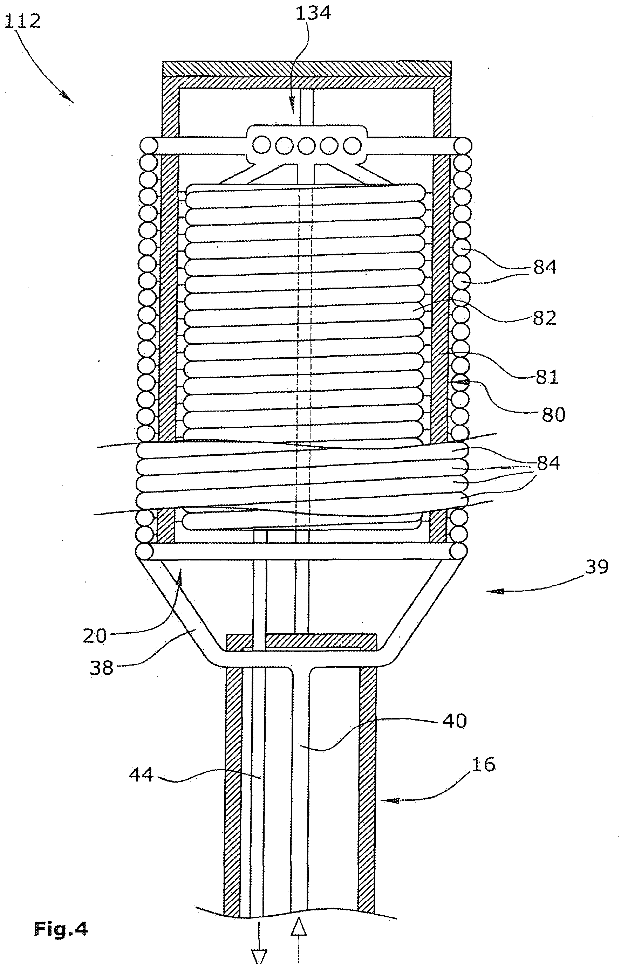

Der Solarempfänger 112 der Figur 4 unterscheidet sich von den Solarempfängern 12,12' der Figuren 1-3 dadurch, dass er nicht selbsttragend ausgebildet ist, sondern einen Empfängerkörper-Rahmen 80 aufweist, der die Außen-Absorptionsleitungen 84 und die Innen-Absorptionsleitungen 82 trägt, die über den Sammelbehälter 134 miteinander verbunden sind. Die jeweils zueinander benachbarten Außen-Absorptionsleitungen 24' sind nur punktförmig miteinander verbunden, so dass sie im Umfang ihrer wärmebedingten Ausdehnung beweglich sind. Der Empfängerkörper-Rahmen 80 weist eine Zylinderstruktur 81 auf, an der sowohl die Außen-Absorptionsleitungen 84 als auch die InnenAbsorptionsleitungen 82 fixiert bzw. aufgehängt sind. Die Innen-Absorptionsleitungen 82 und die Außen-Absorptionsleitungen 84 schirmen die Zylinderstruktur 81 gegen direkte Sonnenstrahlung ab, so dass eine extreme Erwärmung der Zylinderstruktur 81 vermieden wird. Die Zylinderstruktur 81 wird von dem Turm 16 über ein entsprechendes Gestänge gehalten.

## Patentansprüche

1. Solarempfänger (12) für ein thermisches Solarturm-Kraftwerk (10), wobei der Solarempfänger (12) einen einen Hohlraum (18) umschließenden Empfängerkörper (22) aufweist, der innenseitig in dem Hohlraum (18) eine Absorptionsleitung (26) aufweist, in der ein Wärmeträger-Fluid fließen kann, und
wobei der Empfängerkörper (22) eine zu dem Heliostaten- Feld (14) orientierte Strahlungsöffnung (20) aufweist, **dadurch gekennzeichnet, daß** der Empfängerkörper (22) auch außenseitig eine Absorptionsleitung (24) aufweist, in der das Wärmeträgerfluid fließen kann.

2. Thermisches Solarturm-Kraftwerk (10) mit einem zentralen Solarempfänger (12) nach Anspruch 1 und einem Heliostaten- Feld (14).

3. Thermisches Solarturm-Kraftwerk (10) nach Anspruch 2, wobei die Innen-Absorptionsleitung (26) separat von der Außen-Absorptionsleitung (24) ausgebildet ist.

4. Thermisches Solarturm-Kraftwerk (10) nach einem der vorangegangenen Ansprüche, wobei die Innen-Absorptionsleitung (26) stromabwärts der Außen-Absorptionsleitung (24) angeordnet ist.

5. Thermisches Solarturm-Kraftwerk (10) nach einem der vorangegangenen Ansprüche, wobei der Empfängerkörper (22) im Wesentlichen hohlzylindrisch ausgebildet ist.

6. Thermisches Solarturm-Kraftwerk (10) nach einem der vorangegangenen Ansprüche, wobei die Strahlungsöffnung (20) an der unteren Stirnseite des Empfängerkörpers (22) angeordnet ist.

7. Thermisches Solarturm-Kraftwerk (10) nach einem der vorangegangenen Ansprüche, wobei die obere Stirnseite des Empfängerkörpers durch eine Stirnwand (32) geschlossen ist, die bevorzugt thermisch isoliert ist.

8. Thermisches Solarturm-Kraftwerk (10) nach einem der vorangegangenen Ansprüche, wobei an der oberen Stirnseite des Empfängerkörpers (22) ein Sammelbehälter (34) angeordnet ist, in den mehrere parallele Außen-Absorptionsleitungen (24) münden, wobei die Innen-Absorptionsleitung (26) von dem Sammelbehälter (34) abzweigt.

9. Thermisches Solarturm-Kraftwerk (10) nach Anspruch 8, wobei den Außen-Absorptionsleitungen (24) vorgeordnete Zulaufleitungen (38) eine Tragstuktur (39) zum Tragen des Empfängerkörpers (22) bilden.

10. Thermisches Solarturm-Kraftwerk (10) nach einem der vorangegangenen Ansprüche 8 order 9, wobei die Außen-Absorptionsleitungen (24) mehrere zueinander parallele Absorptionsleitungen sind, die den Empfängerkörper (22) bilden.

11. Thermisches Solarturm-Kraftwerk (10) nach einem der vorangegangenen Ansprüche, wobei die Innen-Absorptionsleitung (26') schraubenförmig verläuft.

12. Thermisches Solarturm-Kraftwerk (10) nach einem der Ansprüche 1-10, wobei mehrere Innen-Absorptionsleitungen (26) im Wesentlichen in mehren übereinander liegenden Querebenen in dem Hohlraum (18) liegen.

13. Thermisches Solarturm-Kraftwerk (10) nach einem der vorangegangenen Ansprüche, wobei ein turmnahes Heliostaten-Feld (14₁) auf die Strahlungsöffnung (20) und ein turmfernes Heliostaten-Feld (14₂) auf den gesamten Empfängerkörper (22) gerichtet sind.

## Claims

1. Solar receiver (12) for a solar thermal tower power plant (10), wherein the solar receiver (12) comprises a receiver body (22) enclosing a cavity (18) which has an absorption conduit (26) on the inside of the cavity (18) in which conduit a heat carrier fluid can flow, and
wherein the receiver body (22) has a radiation opening (20) oriented towards a heliostat field (14),
**characterized in that** the receiver body (22) has an absorption conduit (24) also on the outer side, in which the heat carrier fluid can flow.

2. Solar thermal tower power plant (10) with a central solar receiver (12) of claim 1 and a heliostat field (14).

3. Solar thermal tower power plant (10) of claim 2, wherein the inner absorption conduit (26) is formed separate from the outer absorption conduit (24).

4. Solar thermal tower power plant (10) of one of the preceding claims, wherein the inner absorption conduit (26) is arranged downstream of the outer absorption conduit (24).

5. Solar thermal tower power plant (10) of one of the preceding claims, wherein the receiver body (22) is substantially hollow cylindrical in shape.

6. Solar thermal tower power plant (10) of one of the preceding claims, wherein the radiation opening (20) is arranged at the lower end face of the receiver body (22).

7. Solar thermal tower power plant (10) of one of the preceding claims, wherein the upper end face of the receiver body is closed by an end wall (32) which preferably is thermally insulated.

8. Solar thermal tower power plant (10) of one of the preceding claims, wherein a collecting container (34) is formed at the upper end wall of the receiver body (22), a plurality of parallel outer absorption conduits (24) opening into the container, wherein the inner absorption conduit (26) branches from the collecting container (34).

9. Solar thermal tower power plant (10) of claim 8, wherein supply lines (38) arranged upstream of the absorption conduits (24) form a support structure (38) for supporting the receiver body (22).

10. Solar thermal tower power plant (10) of one of the preceding claims 8 or 9, wherein the outer absorption conduits (24) are a plurality of mutually parallel absorption conduits forming the receiver body (22).

11. Solar thermal tower power plant (10) of one of the preceding claims, wherein the inner absorption conduit (26') extends in a helical shape.

12. Solar thermal tower power plant (10) of one of claims 1 - 10, wherein a plurality of inner absorption conduits (26) is arranged substantially in a plurality of superimposed transverse planes in the cavity (18).

13. Solar thermal tower power plant (10) of one of the preceding claims, wherein a heliostat field (14₁) close to the tower is directed towards the radiation opening (20) and heliostat field (14₂) remote from the tower is directed towards the entire receiver body (22).

## Revendications

1. Récepteur solaire (12) pour centrale thermique à tour solaire (10), dans lequel le récepteur solaire (12) comporte un corps de récepteur (22) entourant une cavité (18), ledit corps comportant un conduit d'absorption (26) à l'intérieur de la cavité (18), dans lequel un fluide caloporteur peut s'écouler, et
ledit corps de récepteur (22) comportant un orifice de rayonnement (20) orienté vers un champ d'héliostats (14),
**caractérisé en ce que** ledit corps de récepteur (22) comporte un conduit d'absorption (24) également à l'extérieur de la cavité (18), dans lequel ledit fluide caloporteur peut s'écouler.

2. Centrale thermique à tour solaire (10) avec un récepteur solaire (12) central selon la revendication 1 et un champ d'héliostats (14).

3. Centrale thermique à tour solaire (10) selon la revendication 2, dans laquelle le conduit d'absorption (26) intérieur est formé séparément du conduit d'absorption (24) extérieur.

4. Centrale thermique à tour solaire (10) selon l'une quelconque des revendications précédentes, dans laquelle le conduit d'absorption (26) intérieur est formé en aval du conduit d'absorption (24) extérieur.

5. Centrale thermique à tour solaire (10) selon l'une quelconque des revendications précédentes, dans laquelle ledit corps de récepteur (22) est sensiblement sous la forme d'un cylindre creux.

6. Centrale thermique à tour solaire (10) selon l'une quelconque des revendications précédentes, dans laquelle l'ouverture de rayonnement (20) est disposée sur la face frontale basse du corps de récepteur (22).

7. Centrale thermique à tour solaire (10) selon l'une quelconque des revendications précédentes, dans laquelle la face frontale haute dudit corps de récepteur est fermée par une paroi de front (32) qui est, de préférence, thermiquement isolée.

8. Centrale thermique à tour solaire (10) selon l'une quelconque des revendications précédentes, dans laquelle un récipient collecteur (34) est disposé à la face frontale haute dudit corps de récepteur (22), dans lequel récipient s'ouvrent plusieurs conduits d'absorption (24) extérieurs parallèles, le conduit d'absorption (26) intérieur branchant dudit récipient collecteur (34).

9. Centrale thermique à tour solaire (10) selon la revendication 8, dans laquelle des conduits d'alimentation (38) en amont conduits d'absorption (24) extérieurs forment une structure porteuse (39) pour porter ledit corps de récepteur (22).

10. Centrale thermique à tour solaire (10) selon l'une quelconque des revendications précédentes 8 ou 9, dans laquelle les conduits d'absorption (24) extérieurs sont plusieurs conduits d'absorption parallèles l'un à l'autre, formant ledit corps de récepteur (22).

11. Centrale thermique à tour solaire (10) selon l'une quelconque des revendications précédentes, dans laquelle le conduit d'absorption (26') intérieur s'étend de manière hélicoïdale.

12. Centrale thermique à tour solaire (10) selon l'une quelconque des revendications 1 - 10, dans laquelle plusieurs conduits d'absorption (26) intérieur sont disposés sensiblement dans plusieurs plans transversaux superposés dans ladite cavité (18).

13. Centrale thermique à tour solaire (10) selon l'une quelconque des revendications précédentes, dans laquelle un champ d'héliostats (14₁) près du tour est orienté sur l'orifice de rayonnement (20) et un champ d'héliostats (14₂) est orienté sur tout le corps de récepteur (22).
